# EUROPEAN PATENT SPECIFICATION

(11) **EP 3 091 838 B1**
(45) Date of publication and mention of the grant of the patent: **19.09.2018**
(21) Application number: 13899646.7
(22) Date of filing: 19.12.2013
(51) Int. Cl.: A21D 8/02, A21D 2/00

(54) **IMPROVING DOUGH**
VERBESSERUNG VON TEIG
AMÉLIORATIONS APPORTÉES À DES PÂTES

(43) Date of publication of application: 16.11.2016
(73) Proprietor: Dow Global Technologies LLC, Midland, MI 48674 (US)
(72) Inventor: YUN, Dong, Shanghai 200129 (CN); YAN, Zhengyong, Shanghai 201100 (CN); CAO, Kai, Shanghai 201210 (CN); SHI, Xiuqin, Shanghai 200081 (CN)
(74) Representative: Houghton, Mark Phillip
(86) International application number: PCT/CN2013/089955
(87) International publication number: WO 2015/089785

(56) References cited:
- CN-A- 101 411 344
- CN-A- 101 411 344
- KR-A- 20100 112 935
- US-A- 4 847 104
- US-A1- 2003 165 605
- HUANG MINSHENG ET AL: ""Factors/Parameters influencing the quality of deep-frozen dough"", SHIPIN GONGYE KE-JI - SCIENCE AND TECHNOLOGY OF FOOD INDUSTRY, GAI KAN BIANJIBU, BEIJING, CN, vol. 27, no. 3, 31 March 2006 (2006-03-31) , pages 188-191, XP008181741, ISSN: 1002-0306
- HUANG MINSHENG ET AL.: 'YingxiangLengdongMiantuanZhiliangDeYinsu' SCIENCE AND TECHNOLOGY OF FOOD INDUSTRY 31 March 2006, pages 188 - 190, XP008181741

## Description

Preparation of grain-based cooked products, such as bread, requires many steps, including, for example, bringing the ingredients together, mixing the ingredients to form dough, kneading the dough, and allowing one or more fermentation steps, followed by cooking (for example, baking or frying). Complex processing steps limit high production of breads, and quality is difficult to control due to great variance of manual operations. It is desirable to provide dough in a frozen state. Without using frozen dough, a bake shop that wished to sell freshly-prepared cooked product would need to perform all of the preparation steps immediately before selling the cooked product, which requires extensive time and labor, much of which must be performed during the night before the day of desired sale. Using frozen dough, a bake shop need only thaw the dough and perform only the last few preparation steps (such as final proofing, and cooking) immediately before putting the freshly-prepared cooked product on sale, thus saving time and labor. Use of frozen dough does not require specialized dough workers, and it raises the possibility of making "fresh and standard" bread available at any time of the day. In some cases, frozen dough can be prepared in a factory and then delivered in the frozen state to one or more bake shops.

However, the use of frozen dough can lead to one or more of the following problems: gradual loss of dough strength over the frozen time; after thawing, the dough requires longer fermentation time; decrease in the dough's ability to retain CO₂; the final cooked product has reduced volume; or the final cooked product may have poor texture.

WO 2001/078514 describes a frozen unproofed laminated dough comprising a layer dough and alternating shortening layers; the layer dough includes flour, a water-binding agent, a leavening agent, a fat source, and water. CN101411344 discloses a dough improver for frozen dough comprising gluten, enzymes such as cellulase and hemicellulase, vitamin C, an emulsifier and thickeners such as sodium alginate. KR20100112935 discloses frozen rice dough compsitions comprising gluten, gum, emulsifier, and enzyme ingredients.

It is desired to provide a composition that may be added to flour and optional other ingredients to make a dough that reduces one or all of the problems described above. It is also desired to provide such an improved dough.

The following is a statement of the invention.

A first aspect of the present invention is a composition for improving frozen dough comprising, by weight based on the weight of said composition:
(a) 5% to 20 % one or more cellulosic compound selected from the group consisting of one or more hydroxypropyl methylcelluloses, one or more methylcelluloses, and mixtures thereof;
(b) 0.01% to 1% cellulase;
(c) 5% to 30% one or more glyceride emulsifiers;
(d) 0.1% to 2% one or more coenzyme selected from the group consisting of glucoamylase, α-amylase, and mixtures thereof;
(e) 0.1% to 0.5% one or more antioxidant;
(f) 5% to 20% xanthan gum;
(g) 26.5% to 80% gluten.

A second aspect of the present invention is a method of making an improved dough comprising forming a dough mixture by mixing the composition of the first aspect with flour and optional other ingredients.

A third aspect of the present invention is a dough composition comprising
(a) 5% to 20 % one or more cellulosic compound selected from the group consisting of one or more hydroxypropyl methylcelluloses, one or more methylcelluloses, and mixtures thereof, by weight based on the total weight of ingredients (a) through (g);
(b) 0.01% to 1% cellulase, by weight based on the total weight of ingredients (a) through (g);
(c) 5% to 30% one or more glyceride emulsifiers, by weight based on the total weight of ingredients (a) through (g), by weight based on the total weight of ingredients (a) through (g);
(d) 0.1% to 2% one or more coenzyme selected from the group consisting of glucoamylase, α-amylase, and mixtures thereof, by weight based on the total weight of ingredients (a) through (g), by weight based on the total weight of ingredients (a) through (g);
(e) 0.1% to 0.5% one or more antioxidant, by weight based on the total weight of ingredients (a) through (g);
(f) 5% to 20% xanthan gum, by weight based on the total weight of ingredients (a) through (g);
(g) 26.5% to 80% gluten, by weight based on the total weight of ingredients (a) through (g);
(h) flour,
(i) yeast,
(j) sugar, and
(k) water;
wherein the sum of the weights of ingredients (a) through (g), in parts by the weight based on 100 parts by weight of said flour (h) is 0.1 part to 3 parts, and wherein the sum of the weights of ingredients (a) and (f), in parts by the weight based on 100 parts by weight of said dough composition, is 0.05 parts to 0.2 parts.

The following is a detailed description of the invention.

As used herein, the following terms have the following definitions, unless the context clearly indicates otherwise.

Dough is a thick, malleable paste made from flour mixed with a relatively small amount of water. The amount of water by weight based on the weight of flour is 100% or less. Flour is made by grinding one or more cereal grains.

Cellulosic compounds are cellulose and derivatives of cellulose in which one or more substituents are added to the cellulose backbone.

Cellulase is an enzyme that may exist as a mixture of enzymes produced by bacteria or other organisms. The term "cellulase" includes both enzymes capable of catalyzing the hydrolysis of cellulose and enzymes capable of catalyzing the hydrolysis of hemicellulose.

As used herein, a glyceride is a mono-, di-, or tri-ester of glycerol. A glyceride has the structure I: 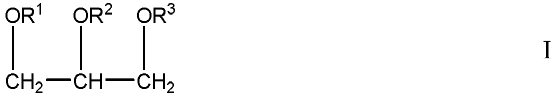 Each of R¹, R², and R³ is independently either hydrogen or an organic group. One or more of R¹, R², and R³ is a residue of a carboxylic acid. A residue of a carboxylic acid has the structure -C(O)-R⁴, where -R⁴ is an organic group, and the carbonyl carbon is attached to a carbon atom in -R⁴. A fatty acid has the structure HOC(O)-R⁵, where -R⁵ is an aliphatic group containing 6 or more carbon atoms, and the carbonyl carbon is attached to a carbon atom in -R⁵. A residue of a fatty acid has the structure -C(O)-R⁵. A glyceride emulsifier is a glyceride in which one or more of R¹, R², and R³ is the residue of a fatty acid. A glyceride emulsifier is referred to herein as a monoglyceride, a diglyceride, or a triglyceride when one, two, or three of R¹, R², and R³, respectively, are residues of fatty acids.

Glycoamylase is an enzyme preparation. It is a protein that is capable of decomposing starch into glucose by hydrolysis of the terminal glucose units from the nonreduced end of a polysaccharide chain. Another enzyme is α-amylase, which is a protein capable of decomposing polysaccharides such as starch by hydrolyzing the alpha bonds.

An antioxidant is a molecule that inhibits the oxidation of other molecules.

Hydrocolloid materials are hydrophilic polymers that are dispersible or swellable in water.

Gluten is a mixture of proteins found in wheat and related grains, such as, for example, barley and rye. Gluten contains gliadin and glutenin.

The composition of the present invention contains ingredients (a) through (g) defined herein above. When reference is made herein to "the total weight of ingredients (a) through (g)," what is meant is the sum of the weights of ingredients (a), (b), (c), (d), (e), (f), and (g). This sum is herein abbreviated "WAG."

The composition of the present invention contains ingredient (a) (herein called "(HP)MC"), which is one or more cellulosic compound selected from the group consisting of one or more hydroxypropyl methylcelluloses, one or more methylcelluloses, and mixtures thereof. The preferred are hydroxypropyl methylcelluloses. (HP)MC compounds may be characterized by the viscosity of a solution of 2% by weight of the (HP)MC compound in water at 20°C according to ASTM D 445-03 using an Ubbelohde capillary viscometer as specified in ASTM D 446-07. Preferably that viscosity is 20,000 mPa●s or less; more preferably 10,000 mPa●s or less; more preferably 5,000 mPa●s or less. Preferably that viscosity is 10 mPa●s or higher; more preferably 30 mPa●s or higher; more preferably 70 mPa●s or higher. The methylcellulose preferably has a methoxyl degree of substitution DS_{methoxyl} of from 1.2 to 2.2, more preferably from 1.5 to 2.0. The hydroxypropyl methylcellulose preferably has a DS_{methoxyl} of from 0.9 to 2.2, more preferably from 1.1 to 2.0, and most preferably from 1.1 to 1.6. The hydroxypropyl methylcellulose preferably has an MS_{hydroxypropoxyl} of from 0.02 to 2.0, more preferably from 0.05 to 1.2, and most preferably from 0.1 to 0.4. The determination of the ether side groups, i.e. the DS_{methoxyl}, and MS_{hydroxypropoxyl} can be effected as described by K.L. Ketterer, W.E. Kester, D.L. Wiederrich, and J.A. Grover, Determination of Alkoxyl Substitution in Cellulose Ethers by Zeisel-Gas Chromatographie, Analytical Chemistry, Vol. 51, No. 13, Nov 1979, 2172-76.

Preferably the amount of (HP)MC compound is, by weight based on WAG, 5% or more; 7.5% or more; more preferably 10% or more. Preferably the amount of (HP)MC compound is, by weight based on WAG, 20% or less; more preferably 17% or less; more preferably 14% or less.

The composition of the present invention contains ingredient (b), which is cellulase. Preferred is hemicellulase. Preferably the amount of cellulase is, by weight based on WAG, 0.01% or more; more preferably 0.03% or more; more preferably 0.1% or more; more preferably 0.25% or more. Preferably the amount of cellulase is, by weight based on WAG, 1% or less; more preferably 0.85% or less; more preferably 0.7% or less.

The composition of the present invention contains ingredient (c), which is one or more glyceride emulsifiers. A glyceride emulsifier has structure defined herein above, where one or more of R¹, R², and R³ is the residue of a fatty acid. Preferred ingredients (c) are selected from glyceride emulsifiers type I, type II, and type III, as defined herein below. More preferred are type I glyceride emulsifiers.

In type I glyceride emulsifiers, one of R¹, R², or R³ is a group (herein called R⁶), that has one or more pendant acetyl groups. Preferably, R⁶ has one or more pendent oxyacetyl groups. The oxyacetyl group has the structure -OC(O)CH₃. More preferably, R⁶ has two pendent oxyacetyl groups. Preferably, R⁶ has one or more pendant carboxyl groups. More preferably, R⁶ is the residue of diacetyltartaric acid. A preferred set of type I glyceride emulsifiers are diacetyltartaric acid esters of mono- and di-glycerides.

In type I glyceride emulsifiers, one or more of the R¹, R², or R³ groups contains no pendant acetyl group. Preferably, one or more of the R¹, R², or R³ groups that contains no acetyl groups is a residue of a fatty acid that has the structure -C(O)-R⁷. Preferably, R⁷ has 15 or more carbon atoms; more preferably 17 or more carbon atoms. Preferably, Preferably, R⁷ has 19 or fewer carbon atoms; more preferably 17 or fewer carbon atoms.

In type II glyceride emulsifiers, each one of R¹, R², and R³ is the residue of a fatty acid -C(O)-R⁵. That is, each one of R¹, R², and R³ contains a -R⁵ group that is aliphatic and contains 6 or more carbon atoms. Preferably among type II glyceride emulsifiers, one or more of the -R⁵ groups contains 7 or more carbon atoms. Preferably among type II glyceride emulsifiers, one or more of the -R⁵ groups contains 9 or fewer carbon atoms. More preferably among type II glyceride emulsifiers, one or more of the -R⁵ groups has exactly 7 carbon atoms and one or more of the -R⁵ groups has exactly 9 carbon atoms. A preferred set of type II glyceride emulsifiers are octyl/decyl triglycerides, which are triglycerides in which each of R¹, R², and R³ is either -C(O)-(CH₂)₆-CH₃ or -C(O)-(CH₂)₈-CH₃.

In type III glyceride emulsifiers, one of R¹, R², or R³ is a group (herein called R⁸), that has one or more pendant hydroxyl groups. Preferably, R⁸ additionally has one or more pendant carboxyl groups; more preferably R⁸ additionally has two or more pendant carboxyl groups; more preferably R⁸ additionally has exactly two pendant carboxyl groups. More preferably R⁸ is the residue of citric acid.

In type III glyceride emulsifiers, preferably one of R¹, R², or R³ is hydrogen. A preferred set of type III emulsifiers is citric acid monoglycerides, which are citric acid esters of monoglycerides.

The amount of glyceride emulsifiers, by weight based on WAG, is 5% or more; preferably 7% or more; more preferably 9% or more; more preferably 11% or more. The amount of glyceride emulsifiers, by weight based on WAG, is 30% or less; preferably 25% or less; more preferably 20% or less; more preferably 15% or less.

The composition of the present invention contains ingredient (d), which is one or more one or more coenzyme selected from the group consisting of glucoamylase, α-amylase, and mixtures thereof. Preferred is glucoamylase. The amount of ingredient (d) is, by weight based on WAG, is 0.1% or more; preferably 0.3% or more; more preferably 0.5% or more. The amount of ingredient (d) is, by weight based on WAG, is 2% or less; more preferably 1.5% or less; more preferably 1.2% or less.

The composition of the present invention contains ingredient (e), which is one or more one or more antioxidant. Preferred antioxidants are beta-carotene, vitamin E, and vitamin C. Preferred is vitamin C. The amount of antioxidant is, by weight based on WAG, 0.1% or more; preferably 0.15% or more; more preferably 0.2% or more. The amount of antioxidant is, by weight based on WAG, 0.5% or less; more preferably 0.4% or less.

The composition of the present invention contains ingredient (f), which is xanthan gum. The amount of xanthan gum, by weight based on WAG, is 5% or more, more preferred is 7.5% or more; more preferred is 10% or more. The amount of xanthan gum, by weight based on WAG, is 20% or less; preferred is 18% or less; more preferred is 16% or less; more preferred is 14% or less.

The composition of the present invention contains ingredient (g), which is gluten. The amount of gluten is, by weight based on WAG, 26.5% or more; more preferably 35% or more; more preferably 45% or more. The amount of gluten is, by weight based on WAG, 80% or less; more preferably 75% or less; more preferably 70%.

A preferred use for ingredients (a) through (g) is to improve the quality of dough. Preferably, ingredients (a) through (g) are mixed with other ingredients to make dough. Preferred other ingredients are flour, yeast water, sugar, optionally salt, and optionally further ingredients.

In a preferred embodiment of the present invention, a group of ingredients comprising the ingredients (a) through (g) are brought together and mixed to form a "dough improver" composition prior to the introduction of other ingredients. Also contemplated are embodiments in which such a dough improver composition contains a relatively small amount (up to 50% by weight based on WAG) of additional ingredients. Preferably, the dough improver composition is made and is then later brought into contact with flour, yeast, water, sugar, optionally salt, and optionally further ingredients, and these ingredients are all mixed together to form a dough composition.

Among embodiments involving use of a dough improver, preferably the amount of water in the dough improver is, by weight based on WAG, 10% or less; more preferably 5% or less; more preferably 2% or less. Among embodiments involving use of a dough improver, preferably the amount of flour in the dough improver is, by weight based on WAG, 10% or less; more preferably 5% or less; more preferably 2% or less. Also contemplated are embodiments in which ingredients (a) through (g) are added to a dough composition in a process that does not involve making a separate dough improver composition. For example, each of ingredients (a) through (g) could be added directly to flour, either before, after, or simultaneously with the addition of one or more of water, sugar, and yeast.

Flour may be made from any of a wide variety of grains or other plants, including, for example, wheat, buckwheat, rye, rice, potatoes, other plants, and mixtures thereof. Preferred is flour in which the content of wheat flour is, by weight based on the weight of the flour, 50% or more; more preferably 75% or more; more preferably 85% or more; more preferably 95% or more. Wheat flour may be refined or whole grain; preferred is refined.

Flour may contain one or more additives including, for example, one or more bleaching agents, one or more preservatives, and mixtures thereof.

The yeast used in the present invention is baker's yeast or sourdough yeast. Baker's yeast is of the species *saccharomyces cerevisiae.* Sourdough yeast is *saccharomyces exiguus.* Preferred is baker's yeast. Preferably the amount of yeast, by weight based on 100 parts by weight of flour, is 0.5 parts or more; more preferably 1 part or more; more preferably 2 parts or more. Preferably the amount of yeast, by weight based on 100 parts by weight of flour, is 8 parts or less; more preferably 5 parts or less.

The sugar used in the dough composition may be any type of sugar that can be metabolized by the yeast. The sugar may be, for example, sucrose, glucose, other sugars, or a mixture thereof. The sugar may be added as refined sugar, honey, other sources of sugar, or mixtures thereof. Preferably the amount of sugar, by weight based on 100 parts by weight of flour, is 0.5 parts or more; more preferably 1 part or more; more preferably 2 parts or more. Preferably the amount of sugar, by weight based on 100 parts by weight of flour, is 8 parts or less; more preferably 5 parts or less.

Preferably salt is used in the dough composition. The salt is sodium chloride. Preferably the amount of salt, by weight based on 100 parts by weight of flour, is 0.5 parts or more; more preferably 1 part or more; more preferably 2 parts or more. Preferably the amount of salt, by weight based on 100 parts by weight of flour, is 8 parts or less; more preferably 5 parts or less.

Water is also present in the dough composition. Preferably the amount of water, by weight based on 100 parts by weight of flour, is 5 parts or more; more preferably 10 parts or more; more preferably 25 parts or more; more preferably 40 parts or more. Preferably the amount of water, by weight based on 100 parts by weight of flour, is 100 parts or less; more preferably 80 parts or less; more preferably 60 parts or less.

Preferably, in the dough composition, the total amount of all the ingredients (a) through (g), by weight based on 100 parts by weight of flour, is 0.1% or more; more preferably 0.2% or more; more preferably 0.4% or more. Preferably, in the dough composition, the total amount of all the ingredients (a) through (g), by weight based on 100 parts by weight of flour, is 10% or less; more preferably 6% or less; more preferably 4% or less.

In the dough composition, it is useful to characterize the sum of ingredients (a) and (f), in parts by weight based on 100 parts by weight the dough composition. That sum is 0.05 parts or more; preferably 0.08 parts or more; more preferably 0.12 parts or more. That sum is 0.2 parts or less.

Preferably, after all the ingredients in the dough composition are brought together and mixed, prior to any appreciable fermentation, the dough composition is homogeneous. Gas bubbles caused by fermentation by the yeast are not considered herein to contribute to lack of homogeneity. The dough composition is considered herein to be homogeneous if there is no domain (other than the gas bubbles from fermentation) within the dough that is starved of flour and that has any dimension of 5 mm or larger. "Starved of flour" means having concentration of flour at a level of 10% or less by weight compared to the concentration of flour by weight in the overall dough composition.

An example of a non-homogeneous dough composition is a laminated dough. In some laminated dough, layers of butter are interleaved with layers of typical dough composition. The thickness of the dough layers may be, for example, approximately 0.01 to 0.02 mm thick, and the layers may have extent in the other two dimensions of 10 mm or more. Laminated dough is not considered herein to be homogeneous.

Preferably, the dough composition of the present invention contains either no dietary fats or a small amount of dietary fats. Dietary fats are edible compounds of structure I in which each of R¹, R², and R³ is a residue of a fatty acid. Preferably, the amount of dietary fats in the dough composition is, based on 100 parts by weight of flour, 3 parts by weight or less; more preferably 1 part by weight or less.

The dough composition may be appropriate to make any type of grain-based cooked product. Preferably, the dough composition is appropriate to make a product that expands in volume due to fermentation by yeast prior to cooking. Preferably, the dough composition is appropriate for making fried or baked bread; more preferably, baked bread.

Preferably, the dough composition is kneaded, divided, proofed, shaped, and baked using conventional methods of making bread. Preferably, the dough is not sprayed.

The following are examples of the present invention.

Raw material used for these examples and their suppliers are given in Table 1.

**Table 1: Raw Materials**

| **Ingredient** | **Supplier** |
|---|---|
| Methocel™ K99 | The Dow Chemical Co. |
| Flour | Qingdao Xinghua Cereal Oil & Foodstuff Co. |
| Sugar | Taikoo Custer Sugar, Hongkong |
| NaCl | China National Salt Industry Corporation |
| Instant Dry Yeast | Angel Yeast Co. |
| Bakerdream™ Frozen Dough Improver | Angel Yeast Co. |
| S500 Dough improver | Puratos Co. |
| Hemicellulase (Bakenzyme™ BXP5001) | BaishideShen Company Ltd. |
| Glycerin monostearate (GMS) | Shuangfeng Food Additive. |
| DATEM⁽¹⁾ | Shuangfeng Food Additive. |
| SSL⁽²⁾ | Shuangfeng Food Additive |
| Glucoamylase (Bakenzyme™ AG800) | BaishideShen Company Ltd. |
| α-amylase | Sinopharm Chemical Reagent Co., Ltd. Shanghai, China. |
| Bacterial amylase | BaishideShen Company Ltd. |
| VC | Sinopharm Chemical Reagent Co., Ltd. Shanghai, China. |
| Xanthan | International Specialty Products, Inc. |
| Wheat Gluten (FP600) | Connell Bros, Company |

| | |
|---|---|
| (1) diacetyltartaric acid ester of mono- and diglycerides (2) sodium stearoyl lactate | |

Frozen dough improver formulations are given in Table 2.

**Table 2: Dough Improver Formulations**

| **Example** | | | | **Composition** | | | |
|---|---|---|---|---|---|---|---|
| | **HPMC** | **Cellulase Enzyme** | **Emulsifier** | **Co-enzymes** | **Anti-Oxidant** | **Hydro-colloid** | **Gluten** |
| 1 | K99 12.35% | Hemicellulase 0.31% | DATEM 12.35% | glucoamylase 0.62% | VC 0.31% | Xanthan 12.35% | 61.71% |
| 2 | K99 12.35% | Hemicellulase 0.63% | DATEM 12.66% | glucoamylase 0.95% | VC 0.32% | Xanthan 6.33% | 66.73% |
| | | | | a-amylase 0.03% | | | |
| 3C | K99 9.90% | None | DATEM 12.35% | glucoamylase 0.93% | VC 0.31% | Xanthan 12.35% | 64.16% |
| 4C | K99 9.90% | None | GMS 12.35% | glucoamylase 0.93% | VC 0.31% | Xanthan 12.35% | 64.16% |
| 5C | K99 9.90% | None | GMS 12.35% | bacterial amylase 0.62% | VC 0.31% | Xanthan 12.35% | 64.47% |
| 6C | K99 9.90% | Hemicellulase 0.63% | SSL 12.35% | glucoamylase 0.62% | VC | Guar 12.35% | 64.47% |
| 7C | None | None | SSL 12.35% | a-amylase 0.62% | VC 0.31% | Guar 22.25% | 64.47% |
| 8C | K4M 12.35% | None | SSL 12.35% | a-amylase 0.62% | VC 0.31% | Xanthan 12.35% | 62.02% |

| | | | | | | | |
|---|---|---|---|---|---|---|---|
| Note: % by weight, based on the weight of total improver | | | | | | | |

Examples 1 and 2 represent the present invention. Examples 3C through 8C are Comparative Examples, as follows:
Example 3C, 4C, and 5C each lacks cellulase enzyme
Example 6C does not have a glyceride emulsifier
Example 7C has no (HP)MC and has no cellulase enzyme
Example 8C has no cellulase enzyme

Furthermore, two commercialized products S500 (Puratos Co.) and Baker Dream (Angel yeast Co.) were selected as comparative Examples 9C and 10C. (Results are shown in table 5 and table 6).

S500 is a conventional dough improver, and Baker Dream is a commercial frozen dough improver. Due to good anti-freezing and baking performance, they are popularly used, though their performance is not as good as that of the present invention. Neither S500 nor Baker Dream has the composition of the present invention.

Dough Preparation was as follows. The dough recipe for the basic bread contained flour, salt, instant dry yeast, sugar, water, and improvers. The preparation of dough included the following steps:
(a) The ingredients such as Salt (NaCl), Sugar, and Yeast were dissolved in water at room temperature. This water containing ingredients was used in next steps and herein will be referred to as water.
(b) The improver was premixed with flour.
(c) Then flour was poured into the kneader (Kenwood Company) and sequentially water was added from step (i).
(d) Dough was mixed automatically in kneader for 10 min with the stirring rate at 70-120 rpm (speed 1) followed by manually kneading for 2 min.
(e) Then the kneaded dough was left for 10 min and then divided into pieces weighing 320g. These pieces were used for Fermentation Rheology Test.
(f) For bread baking test, the prepared dough from step (iv) was divided into 25 g rounded pieces.
(g) The dough for freeze-thaw test was stored in freezer at temperature (-18°C) for 2 days followed by thawing at 25°Cfor 2 hours.

The test methods were as follows.

### Stretching test

(a) The dough stretching test was conducted by TA analyzer (Texture Plus, TA Company) by a standard method named "SMS/Kieffer Dough and Gluten Extensibility Rig." This rig was developed at the Kurt Hess Institute in Munich by Dr. Kieffer as an improvement to the extensibility measurements provided by the Brabender Extensograph. The rig comprises a dough sample preparation press and mould, a spring-loaded test rig and a test hook. A prepared sample from the preparation press is securely located in the jig so that the hook, positioned underneath, can move vertically through it. The elongation time to break (extension) was measured.
(b) Dough sheet samples of 5cm ×1cm ×0.3cm was processed by dough sheeting extruder.
(c) For each example, 12 parallel dough sheets were prepared and measured to avoid measurement errors.
(d) The average elongation time was recorded to demonstrate stretching capability of dough.

The Fermentation Rheology Test was performed as follows.
(a) Rheofermentometer F3 (The Chopin company) was utilized to show the fermentation performance of dough samples in the above examples.
(b) The parameter index were Hm' (Dough height after fermentation) and CO₂ retention volume.
(c) The higher performance of Hm' and CO₂ retention volume indicate higher quality of dough improvers, which is beneficial for the bread performance during freeze-thaw and fermentation process.
(d) The test process is listed as follows:
   - 320 g of dough was placed in the bottom of a testing basket
   - Piston was placed on the top of dough
   - 2 kg weight were used according to the protocol
   - The assembly was placed in the reaction tank
   - Dough height was recorded by a sensor placed on the piston extremity.
(e) The standard protocol of Chopin Company was utilized, related parameters were:
   - Temperature: 28.5°C
   - Standard plunger
   - Loading weight: 2kg
   - Test time: 3 hours

The Baking Test was performed as follows:
(a) The baking test is based on the preparation of basic round bread.
(b) The dough was prepared according to the recipe, and then was divided into 25 g pieces and rounded
(c) The proofing was conducted in oven (Self-cooking Center, Rational Company).
(d) All dough pieces were proofed at 32°C temperature and 80% relative humidity for 30 min, then the dough pieces were manually rounded, then the dough was given an additional 30 min proofing in oven on the same conditions.
(e) The proofed dough was baked at 205°C for 10 min with 3-class wind flow.
(f) After cooling down, the volume and broken number of bread were recorded.
(g) For each example, the average volume data was based on more than 12 bread repeats, which was utilized to demonstrate CO₂ production and retention capability of bread.

The stretching property of dough partially demonstrates the extension capability of gluten network. The higher stretching results indicate the higher capability of dough to retain CO₂, and then lead to bigger bread volume. Herein, elongation time of dough sheet was measured by TA analyzer, which represents part of stretching performance.

**Table 3: Recipe for Stretching Test**

| | |
|---|---|
| Flour | 100 parts |
| Yeast | 3 parts |
| Sugar | 3 parts |
| Salt | 3 parts |
| Water | 56 parts |
| Improver | According to the experiment design |

| | |
|---|---|
| **parts refer to the weight parts of each ingredient* | |

Results of the Stretching Test were as follows.

**Table 4: Results of the Stretching Test**

| Example | *loading of Improver*# | Average elongation time before freeze-thaw /s* | Average elongation time after freeze-thaw /s |
|---|---|---|---|
| Example 1 | 1.3 parts | 7.76 ± 0.98 | 12.67± 0.77 |
| Example 10C | 1.3 parts | 4.66 ± 0.63 | 7.54± 0.54 |

| | | | |
|---|---|---|---|
| # The loading is weight parts versus flour basis * The data is Average ± standard deviation of all repeated samples | | | |

It was observed that the elongation time of Example 1 was much higher than that of Example 10C in both fresh and frozen dough. The time difference becomes more significant after freeze-thaw treatment.

The result indicated that addition of inventive improver compositions improved stretching capability of gluten network, especially during freeze-thaw process. This is highly beneficial for the volume extension of bread in fermentation and baking process.

### Fermentation Rheology Test

Due to temperature fluctuations during storage and thawing, ice crystal grows and melts which destroys the gluten matrix of frozen dough. As result the rheoferment characteristics influences significantly. These rheoferment characteristics includes Maximum height, Stability, Dough tolerance to fermentation, Development speed, Total gas production, Gas retention, Porosity, Time for porosity, etc. These properties are important indicators for baking performance. The better fermentation rheology data the better bread performance will be. Herein, the CO₂ retention volume and H'm are utilized to show the quality of frozen dough, which are directly relevant to the final bread performance. Dough recipe for fermentation test is same as Table 3.

The results of fermentation rheology test of different composition (Table 3) are summarized in Table 5. These tests indicate synergistic effects in the proposed compositions.

**Table 5: Results of the Fermentation Rheology Test**

| **Example** | **loading of Improver^{#}** | **Before freeze-Thaw treatment** | | **After freeze-Thaw treatment** | |
|---|---|---|---|---|---|
| | | **Hm'/cm** | **CO₂ retention/ml** | **Hm'/cm** | **CO₂ retention/ml** |
| 1 | 1.3 parts | 84.8 | 1811 | 82.8 | 1839 |
| 2 | 1.3 parts | 85.6 | 1920 | 84.3 | 1930 |
| 3 | 1.3 parts | 71.2 | 1444 | 71.2 | 1467 |
| 4 | 1.3 parts | 65 | 1248 | 66.3 | 1143 |
| 5 | 1.3 parts | 56.7 | 1183 | 55.5 | 1078 |
| 6 | 1.3 parts | 66.9 | 1261 | 67.8 | 1279 |
| 7 | 1.3 parts | 60.1 | 1134 | 53.3 | 1026 |
| 8 | 2 parts | 58.5 | 1115 | 52.8 | 1051 |
| 9 | 2 parts | 65.4 | 1220 | 60.2 | 1175 |
| 10 | 1.3 parts | 78.3 | 1845 | 78.3 | 1716 |

| | | | | | |
|---|---|---|---|---|---|
| # The loading is weight parts versus 100 parts by weight of flour | | | | | |

The inventive example 1 and 2 are based on HPMC based system. The Hm' values are above 80 cm both before and after freeze-thaw treatment, which are much higher than that of all comparative examples.

CO₂ retention values of Inventive example 1 and 2 are 1811 and 1920 respectively which are much higher than Example 3C through 9C, and comparable with Example 10C (1845ml). After freeze-thaw treatment, the CO₂ retention values of Inventive examples are not reduced (even slightly increased). However, the CO₂ retention volume of Example 10 decreases about 7% (from 1845 to 1716 ml) after freeze-thaw. The results indicate that the addition of inventive improver into the composition has improved CO₂ production and protection both in fresh and frozen dough systems.

The synergistic effects would be destroyed when changing proposed ingredients (as shown in Example 3C). Since the composition of example 3C has not contained cellulose enzyme, therefore the designed reaction between HPMC and cellulase was not possible, therefore the CO₂ retention values of Example 3C is just 60% in comparison of Example1 and 2. This demonstrated the necessity of cellulase in the composition.

Without cellulase, the fermentation rheology performance cannot be easily improved by varying other ingredients, such as enzyme and emulsifier. As shown in Example 4C and 5C, the emulsifier and enzyme are respectively changed to GMS and bacterial amylase. The Hm' and CO₂ retention volume of them are much lower than those from Example 1 and 2.

The type of emulsifier is also critical as shown in Example 6. In example 6C the emulsifier used was SSL instead of DATEM. In comparison of inventive examples (1 and 2), there was a significant decrease in fermentation characteristics was observed. The absence of DATEM had significant negative influence to dough performance, which indicated that synergistic effect existed among the proposed HPMC, Cellulase, co-enzyme and DATEM systems.

Such synergistic effects are superior to the simple combination of ingredients as shown in Comparative Examples 7C and 8C. Various combinations were made in Comparative Examples 7C and 8C, but the fermentation performance was lower than that of the compositions of the current invention.

### Bread Test.

Bread test was conducted for the examples 1, 2 and 10 which were having top fermentation performances. Dough recipe for bread test listed in Table 6.

**Table 6 Dough recipe for bread test**

| | |
|---|---|
| Flour | 100 parts |
| Yeast | 1.5 parts |
| Sugar | 6 parts |
| Salt | 1.5 parts |
| Water | 50 parts |
| Improver | According to the experiment design |

| | |
|---|---|
| *parts refer to the weight parts of each ingredient | |

The breads were prepared according to above mentioned method and bread volumes and broken number were recorded. Performance of bread baking test is shown in Table 7.

**Table 7: Results of Bread Baking Test**

| **Example** | **loading of Improver^{&}** | **Before freeze-Thaw treatment** | | **After freeze-Thaw treatment** | |
|---|---|---|---|---|---|
| | | **Volume /mm³*** | **Bread Broken %^{#}** | **Volume /mm³*** | **Bread Broken %^{#}** |
| 1 | 0.5 parts | 124.7±2.9 | 0 | 114.1±5.5 | 0 |
| 2 | 0.5 parts | 127.7±4.2 | 0 | 122.4±5.4 | 0 |
| 10 | 0.5 parts | 124.4 ±3.8 | 8% | 110.8±9.3 | 30% |

| | | | | | |
|---|---|---|---|---|---|
| ^{&} *The loading is weight parts versus flour basis* * *The data is Average* ± *standard deviation of all repeated samples* ^{#} *The broken bread is defined as: obvious cracks (length is more than 1 cm) is observed on the surface of bread, and the inner of bread is exposed to the panel* | | | | | |

The results demonstrated that the bread containing proposed improver (Example 1, 2) achieved better performance than commercialized product (Example 10C).

For the dough without freeze-thaw treatment, the bread volumes of all examples 1, 2 and 10C are comparable (124.7, 127.7 and 124.4 respectively).

The bread broken % of Example 10C (8%) is significantly higher than that of inventive Examples (0% for both).

For the dough after freeze-thaw treatment, the difference between inventive and comparative examples is more significant.

The bread volumes of Example 1 and 2 are much bigger than that of comparative Example 10C (114.1, 122.4 and 110.8 respectively).

No bread of Example 1 and 2 were broken, but about 30% breads of Example 10C were cracked during baking process.

The results indicate that current invention can improve dough quality by increasing CO₂ productivity and protection, especial during freeze-thaw process.

### Panel Test

A panel test was done to further compare examples. This panel test also demonstrated the same conclusion as the bread test in Table 7. Five persons were invited in the panel to evaluate volume, appearance and chewing texture of breads prepared from different Examples (after freeze-thaw). Based on evaluation, the performance of each Example was ranked by each panel person, as shown in Table 8.

**Table 8: Results of Panel Test**

| | Panel 1 | Panel 2 | Panel 3 | Panel 4 | Panel 5 |
|---|---|---|---|---|---|
| Volume | 1=2>10C | 2=1>10C | 1=2>10C | 2>1>10C | 2>10>1 |
| Appearance | 2>1>10C | 2>1>10C | 2>1>10C | 2>1>10C | 2>1>10C |
| Chewing Texture | 10C=1=2 | 1>2>10C | 2>1>10C | 2=1=10C | 2>1=10C |
| Total Performance | 2>1>10C | 2>1>10C | 2>1>10C | 2>1>10C | 2>1=10C |

| | | | | | |
|---|---|---|---|---|---|
| >: based on panel evaluation, the left one is better than the right one. = based on panel evaluation, the left one has no significant difference with the right one. (for example, "1=2>10C" means that Example 1 was equal to Example 2, which was better than Comparative Example 10C). | | | | | |

It was observed that the total performance of inventive Example No.2 and No. 1 was ranked higher than that of comparative Example 10C. The panel results coincides the performance results of Table 7.

We also propose the multiple freeze-thaw process for dough in the current invention as multiple thawing will significantly improve the feasibility of baking of dough later (If the dough was not used after thaw, it can be re-frozen for next time baking process) which is beneficial for bake-shop operators.

The Examples 1 and 10C were utilized again after conducting multiple freeze-thaw process. The multiple freeze thaw processes were done 3-times. The conditions are shown in Table 9.

**Table 9: Method of Multiple Freeze-Thaw Cycles**

| Operation | Frozen (day) | Thaw (h) |
|---|---|---|
| First time | 1 | 1 |
| Second time | 2 | 6 (Over thawing) |
| Third Time | 1 | 2 |

After multiple freeze-thaws, the dough was divided into 25 g pieces and rounded, followed by proofing 2 times of the bread dough and baking according to above mentioned methods. The comparison in volume of bread after one freeze thaw process and multiple (3 times) freeze thaw process is shown in table 10.

**Table 10: Volume of Bread after freeze-thaw processes**

| **Example** | **After 1^{st} time freeze-Thaw treatment** | **After 3 times freeze-Thaw treatment** |
|---|---|---|
| | **Volume /mm³*** | **Volume /mm³*** |
| 1 | 114.1±5.5 | 114.0 ± 5.7 |
| 10 | 110.8±9.3 | 89.6 ± 4.1 |

The average volume of Example 1 is 114.0 ± 5.7 mm³ (mean ± standard deviation), which is significantly higher than comparative example 10C (average volume is 89.6 ± 4.1 mm³). In Example 1 even after three times of freeze-thaw treatment, the bread volume was the same. The above results have demonstrated the high freeze-thaw-tolerance of the inventive compositions.

A panel test of the samples was done to further compare multiple freeze-thaw examples, as shown in Table 11. This panel test also demonstrated that Example 1 achieved much higher panel performance than Example 10C.

**Table 11: Panel Performance after freeze-thaw cycles**

| | Panel 1 | Panel 2 | Panel 3 | Panel 4 | Panel 5 |
|---|---|---|---|---|---|
| Volume | 1>10C | 1>10C | 1>10C | 1>10C | 1>10C |
| Appearance | 1>10C | 1>10C | 1>10C | 1>10C | 1>10C |
| Chewing Texture | 1>10C | 1>10C | 1>10C | 1>10C | 1>10C |
| Total Performance | 1>10C | 1>10C | 1>10C | 1>10C | 1>10C |

| | | | | | |
|---|---|---|---|---|---|
| >: based on panel evaluation, the left one is better than the right one. = based on panel evaluation, the left one has no significant difference with the right one. | | | | | |

It was observed that the total performance of inventive Example No.1 was ranked higher than that of comparative Example 10C. The panel results coincides the performance results of Table 10.

## Claims

1. A composition for improving frozen dough comprising, by weight based on the weight of said composition:
(a) 5% to 20 % one or more cellulosic compound selected from the group consisting of one or more hydroxypropyl methylcelluloses, one or more methylcelluloses, and mixtures thereof;
(b) 0.01% to 1% cellulase;
(c) 5% to 30% one or more glyceride emulsifiers;
(d) 0.1% to 2% one or more coenzyme selected from the group consisting of glucoamylase, α-amylase, and mixtures thereof;
(e) 0.1% to 0.5% one or more antioxidant;
(f) 5% to 20% xanthan gum;
(g) 26.5% to 80% gluten.

2. The composition of claim 1, wherein said glyceride emulsifier (c) comprises one or more emulsifier selected from the group consisting of one or more diacetyltartaric acid esters of mono- or diglycerides, one or more octyl/decyl triglycerides, one or more citric acid monoglyceride, and mixtures thereof.

3. The composition of claim 1, wherein said antioxidant (e) comprises vitamin C.

4. A method of making an improved dough comprising forming a dough mixture by mixing the composition of claim 1 with flour and optional other ingredients.

5. The method of claim 4, wherein said optional other ingredients comprise yeast and water.

6. The method of claim 4 further comprising freezing said dough mixture and then thawing said dough mixture.

7. A dough composition comprising
(a) 5% to 20 % one or more cellulosic compound selected from the group consisting of one or more hydroxypropyl methylcelluloses, one or more methylcelluloses, and mixtures thereof, by weight based on the total weight of ingredients (a) through (g);
(b) 0.01% to 1% cellulase, by weight based on the total weight of ingredients (a) through (g);
(c) 5% to 30% one or more glyceride emulsifiers, by weight based on the total weight of ingredients (a) through (g);
(d) 0.1% to 2% one or more coenzyme selected from the group consisting of glucoamylase, α-amylase, and mixtures thereof, by weight based on the total weight of ingredients (a) through (g);
(e) 0.1% to 0.5% one or more antioxidant, by weight based on the total weight of ingredients (a) through (g);
(f) 5% to 20% xanthan gum, by weight based on the total weight of ingredients (a) through (g);
(g) 26.5% to 80% gluten, by weight based on the total weight of ingredients (a) through (g);
(h) flour,
(i) yeast,
(j) sugar, and
(k) water;
wherein the sum of the weights of ingredients (a) through (g), in parts by the weight
based on 100 parts by weight of said flour (h) is 0.1 part to 3 parts, and
wherein the sum of the weights of ingredients (a) and (f), in parts by the weight based on 100 parts by weight of said dough composition, is 0.05 parts to 0.2 parts.

8. The dough composition of claim 7, wherein said composition is homogeneous.

## Patentansprüche

1. Eine Zusammensetzung zum Verbessern von gefrorenem Teig, die, bezogen auf das Gewicht der Zusammensetzung, Folgendes beinhaltet:
(a) zu 5 Gew.-% bis 20 Gew.-% eine oder mehrere Celluloseverbindungen, ausgewählt aus der Gruppe, bestehend aus einer oder mehreren Hydroxypropylmethylcellulosen, einer oder mehreren Methylcellulosen und Mischungen davon;
(b) zu 0,01 Gew.-% bis 1 Gew.-% Cellulase;
(c) zu 5 Gew.-% bis 30 Gew.-% einen oder mehrere Glyceridemulgatoren;
(d) zu 0,1 Gew.-% bis 2 Gew.-% ein oder mehrere Coenzyme, ausgewählt aus der
Gruppe, bestehend aus Glucoamylase, α-Amylase und Mischungen davon;
(e) zu 0,1 Gew.-% bis 0,5 Gew.-% ein oder mehrere Antioxidationsmittel;
(f) zu 5 Gew.-% bis 20 Gew.-% Xanthangummi; (g) zu 26,5 Gew.-% bis 80 Gew.-% Gluten.

2. Zusammensetzung gemäß Anspruch 1, wobei der Glyceridemulgator (c) einen oder mehrere Emulgatoren beinhaltet, ausgewählt aus der Gruppe, bestehend aus einem oder mehreren Diacetylweinsäurestern von Mono- oder Diglyceriden, einem oder mehreren Octyl/Decyltriglyceriden, einem oder mehreren Zitronensäuremonoglyceriden und Mischungen davon.

3. Zusammensetzung gemäß Anspruch 1, wobei das Antioxidationsmittel (e) Vitamin C beinhaltet.

4. Ein Verfahren zum Herstellen eines verbesserten Teigs, das das Bilden einer Teigmischung durch das Mischen der Zusammensetzung gemäß Anspruch 1 mit Mehl und optionalen anderen Bestandteilen beinhaltet.

5. Verfahren gemäß Anspruch 4, wobei die optionalen anderen Bestandteile Hefe und Wasser beinhalten.

6. Verfahren gemäß Anspruch 4, das ferner das Einfrieren der Teigmischung und dann das Auftauen der Teigmischung beinhaltet.

7. Eine Teigzusammensetzung, die Folgendes beinhaltet:
(a) bezogen auf das Gesamtgewicht der Bestandteile (a) bis (g), zu 5 Gew.-% bis 20 Gew.-% eine oder mehrere Celluloseverbindungen, ausgewählt aus der Gruppe, bestehend aus einer oder mehreren Hydroxypropylmethylcellulosen, einer oder mehreren Methylcellulosen und Mischungen davon;
(b) bezogen auf das Gesamtgewicht der Bestandteile (a) bis (g), zu 0,01 Gew.-% bis 1 Gew.-% Cellulase;
(c) bezogen auf das Gesamtgewicht der Bestandteile (a) bis (g), zu 5 Gew.-% bis 30 Gew.-% einen oder mehrere Glyceridemulgatoren;
(d) bezogen auf das Gesamtgewicht der Bestandteile (a) bis (g), zu 0,1 Gew.-% bis 2 Gew.-% ein oder mehrere Coenzyme, ausgewählt aus der Gruppe, bestehend aus Glucoamylase, α-Amylase und Mischungen davon;
(e) bezogen auf das Gesamtgewicht der Bestandteile (a) bis (g), zu 0,1 Gew.-% bis 0,5 Gew.-% ein oder mehrere Antioxidationsmittel;
(f) bezogen auf das Gesamtgewicht der Bestandteile (a) bis (g), zu 5 Gew.-% bis 20 Gew.-% Xanthangummi;
(g) bezogen auf das Gesamtgewicht der Bestandteile (a) bis (g), zu 26,5 Gew.-% bis 80 Gew.-% Gluten;
(h) Mehl,
(i) Hefe,
(j) Zucker und
(k) Wasser;
wobei die Summe des Gewichts der Bestandteile (a) bis (g) in Gewichtsteilen, bezogen auf 100 Gewichtsteile des Mehls (h), 0,1 Teil bis 3 Teile beträgt und
wobei die Summe des Gewichts der Bestandteile (a) und (f) in Gewichtsteilen, bezogen auf 100 Gewichtsteile der Teigzusammensetzung, 0,05 Teile bis 0,2 Teile beträgt.

8. Teigzusammensetzung gemäß Anspruch 7, wobei die Zusammensetzung homogen ist.

## Revendications

1. Une composition pour améliorer une pâte surgelée comprenant, en poids rapporté au poids de ladite composition :
(a) de 5 % à 20 % d'un ou de plusieurs composés cellulosiques sélectionnés dans le groupe constitué d'une ou de plusieurs hydroxypropyl méthylcelluloses, d'une ou de plusieurs méthylcelluloses, et de mélanges de celles-ci ;
(b) de 0,01 % à 1 % de cellulase ;
(c) de 5 % à 30 % d'un ou de plusieurs émulsifiants glycérides ;
(d) de 0,1 % à 2 % d'une ou de plusieurs coenzymes sélectionnées dans le groupe constitué de la glucoamylase, de l'a-amylase, et de mélanges de celles-ci ;
(e) de 0,1 % à 0,5 % d'un ou de plusieurs antioxydants ;
(f) de 5 % à 20 % de gomme de xanthane ; (g) de 26,5
% à 80 % de gluten.

2. La composition de la revendication 1, dans laquelle ledit émulsifiant glycéride (c) comprend un ou plusieurs émulsifiants sélectionnés dans le groupe constitué d'un ou de plusieurs esters d'acides diacétyltartriques de mono- ou diglycérides, d'un ou de plusieurs triglycérides d'octyle/décyle, d'un ou de plusieurs monoglycérides d'acide 20
citrique, et de mélanges de ceux-ci.

3. La composition de la revendication 1, dans laquelle ledit antioxydant (e) comprend de la vitamine C.

4. Une méthode de fabrication d'une pâte améliorée comprenant la formation d'un mélange de pâte en mélangeant la composition de la revendication 1 avec de la farine et d'autres ingrédients facultatifs.

5. La méthode de la revendication 4, dans laquelle lesdits autres ingrédients facultatifs 30 comprennent de la levure et de l'eau.

6. La méthode de la revendication 4 comprenant en sus la surgélation dudit mélange de pâte et ensuite la décongélation dudit mélange de pâte.

7. Une composition de pâte comprenant
(a) de 5 % à 20 % d'un ou de plusieurs composés cellulosiques sélectionnés dans le groupe constitué d'une ou de plusieurs hydroxypropyl méthylcelluloses, d'une ou de plusieurs méthylcelluloses, et de mélanges de celles-ci, en poids rapporté au poids total des ingrédients (a) jusqu'à (g) ;
(b) de 0,01 % à 1 % de cellulase, en poids rapporté au poids total des ingrédients (a) jusqu'à (g) ;
(c) de 5 % à 30 % d'un ou de plusieurs émulsifiants glycérides, en poids rapporté au poids total des ingrédients (a) jusqu'à (g) ;
(d) de 0,1 % à 2 % d'une ou de plusieurs coenzymes sélectionnées dans le groupe constitué de la glucoamylase, de l'a-amylase, et de mélanges de celles-ci, en poids rapporté au poids total des ingrédients (a) jusqu'à (g) ;
(e) de 0,1 % à 0,5 % d'un ou de plusieurs antioxydants, en poids rapporté au poids total des ingrédients (a) jusqu'à (g) ;
(f) de 5 % à 20 % de gomme de xanthane, en poids rapporté au poids total des ingrédients (a) jusqu'à (g) ;
(g) de 26,5 % à 80 % de gluten, en poids rapporté au poids total des ingrédients (a) jusqu'à (g) ;
(h) de la farine,
(i) de la levure,
(j) du sucre, et (k) de l'eau ;
dans laquelle la somme des poids des ingrédients (a) jusqu'à (g), en parties en poids rapporté à 100 parties en poids de ladite farine (h), va de 0,1 partie à 3 parties, et dans laquelle la somme des poids des ingrédients (a) et (f), en parties en poids rapporté à 100 parties en poids de ladite composition de pâte, va de 0,05 partie à 0,2 partie.

8. La composition de pâte de la revendication 7, dans laquelle ladite composition est homogène.
